# EUROPÄISCHE PATENTSCHRIFT

(11) **EP 0 726 636 B1**
(45) Veröffentlichungstag und Bekanntmachung des Hinweises auf die Patenterteilung: **15.03.2000**
(21) Anmeldenummer: 96810057.8
(22) Anmeldetag: 29.01.1996
(51) Int. Cl.: H02K 13/00, H02K 19/16, H01R 39/14

(54) **Elektrische Synchronmaschine mit ausserhalb des Maschinengehäuses angeordneten Schleifringen und Verfahren zur deren Herstellung**
Synchronous electric machine with slip rings mounted externally to the casing of the machine and method of manufacturing
Machine électrique synchrone avec des bagues collectrices montées à l'extérieur du bâti de la machine et procédé de fabrication

(30) Priorität: 13.02.1995 DE 19504655
(43) Veröffentlichungstag der Anmeldung: 14.08.1996
(73) Patentinhaber: ASEA BROWN BOVERI AG, 5400 Baden (CH)
(72) Erfinder: Kleinburger, Johann, CH-8481 Höri (CH); Zimmermann, Hans, CH-8617 Mönchaltorf (CH)

(56) Entgegenhaltungen:
- WO-A-90/05395
- DE-A- 3 510 489
- GB-A- 2 078 017

## Beschreibung

### TECHNISCHES GEBIET

Die Erfindung bezieht sich auf eine elektrische Synchronmaschine mit einer ausserhalb des Maschinengehäuses angordneten Schleifringanordnung, welche Schleifringe umfasst, die isoliert auf einer Welle befestigt sind.

Die Erfindung bezieht sich ferner auf ein Verfahren zur Herstellung der dafür vorgesehenen Schleifringanordnung.

### TECHNOLOGISCHER HINTERGRUND UND STAND DER TECHNIK

Die Schleifringe für Synchronmaschinen sind mit Gleichstrom gespeist. Man hat also entsprechend den beiden Polaritäten einen kathodischen und einen anodischen Schleifring. Meist werden Stahlringe verwendet. Sie werden entweder isoliert auf eine Schleifringbüchse oder isoliert direkt auf das nicht-antriebsseitige Wellenende der Maschine aufgeschrumpft (vgl. Wiedemann/Kellenberger "Konstruktion elektrischer Maschinen", Springer-Verlag Berlin, Heidelberg, New York 1967, Abb 386 bzw. Abb.387 auf Seite 392). Diese Technik hat sich seit vielen Jahren bestens bewährt, setzt aber voraus, dass das NS-Wellenende so beschaffen ist, dass die beiden Schleifringe aufgeschoben werden können.

Bei neueren Turbogruppen für sogenannte Kombianlagen - dort wird eine Gasturbine mit einem Dampkraftwerk kombiniert, um die Abwärme der Gasturbine zum Betrieb einer Dampfturbine zu nutzen - treiben die Gasturbine und die Dampfturbine gemeinsam einen Turbogenerator (SSPT - Single-Shaft Power Train). Bei solchen Einwellenanlagen weist der zwischen Gasturbine und Dampfturbine angeordnete Generator Kupplungen an beiden Wellenenden auf. Die Kupplung an dem den Schleifringen gegenüberliegenden Wellenende ist konventionell, in der Regel als Flanschkupplung ausgebildet. Am anderen Ende hingegen muss eine Kupplung verwendet werden, die es erlaubt, die beiden Schleifringe über das Wellenende stülpen zu können. Hier kommen aufwendige Schrumpfkupplungen mit Keilen zum Einsatz, um das Drehmoment von der thermischen Maschine auf den Generator übetragen zu können. Die an sich naheliegende Möglichkeit, die Schleifringe vom Innendurchmesser her so zu bemessen, dass sie über einen Kupplungsflansch geschoben werden können und dann auf einem Wellenbund hinter der Kupplung zu befestigen, scheidet aus, weil die damit verbundene Vergrösserung des Aussendurchmessers der Schleifringe zu übergrossen Umfangsgeschwindigkeiten und zur Beeinträchtigung der Rotordynamik führt.

### KURZE DARSTELLUNG DER ERFINDUNG

Der Erfindung liegt die Aufgabe zugrunde, eine elektrische Synchronmaschine mit ausserhalb des Maschinengehäuses angeordneten Schleifringen zu schaffen, bei welcher die Baulänge und insbesondere der Ueberhang nicht erhöht wird, und bei der die konventionellen Schleifringe beibehalten werden können. Aufgabe der Erfindung ist es ferner, ein Verfahren zur Herstellung einer solchen Maschine anzugeben.

Diese Aufgabe wird erfindungsgemäss dadurch gelöst, dass die Schleifringe auf einer separaten, mit der eigentlichen Welle der elektrischen Maschine mittels einer ersten lösbaren Kupplung verbundenen Schleifringwelle angeordnet sind, welche Schleifringwelle an ihrem der elektrischen Maschine abgewandten Ende mit einem Kupplungsflansch, welche die eine Hälfte einer zweiten Kupplung bildet, versehen ist, wobei dieser Kupplungsflansch mit der Schleifringwelle durch Schweissen verbunden ist.

Das Verfahren zur Herstellung ist erfindungsgemäss dadurch gekennzeichnet, dass auf eine einseitig mit einem ersten Kupplungsflansch versehene Schleifringwelle die beiden Schleifringe aufgeschoben werden, dann an das freie Ende der Schleifringwelle ein zweiter Kupplungsflansch mit Uebermass angeschweisst wird, dieser danach durch thermische Behandlung spannungsfrei gemacht und auf Sollmass überdreht wird, anschliessend die beiden Schleifringe isoliert auf der Schleifringwelle befestigt und gleichfalls auf Sollmass überdreht werden.

Die Vorteile der Erfindung stellen sich insbesondere wie folgt dar:
- kurze Baulänge bis zum Kupplungsflansch der Schleifringwelle;
- Kurzschlussmomente müssen nicht durch eine Schrumpfkupplung und zusätzliche Keile übetragen werden;
- infolge der kleinen Massen, der kurzen Einbaulänge und dem geringeren Ueberhang ergeben sich rotordynamische Vorteile;
- durch Beibehalten von Flanschkupplungen kann sowohl die Schleifringanordnung samt Schleifringwelle oder auch der gesamte Generator seitlich herausgefahren werden, wenn dies erforderlich sein sollte, z.B. bei Reparaturen oder Service-Arbeiten.

Die Erfindung wird nachstehend anhand eines in der Zeichnung dargestellten Ausführungsbeispiels näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: eine schematische Dastellung einer bekannten als Einwellenanlage ausgebildten thermischen Kombianlage mit einem von einer Gasturbine und von einer Dampfturbine angetriebenem Turbogenerator;
- Fig.2: einen Längsschnitt bzw. Seitenansicht der Schleifringanordnung des Turbogenerators gemäss Fig.1.

### WEGE ZUR AUSFÜHRUNG DER ERFINDUNG

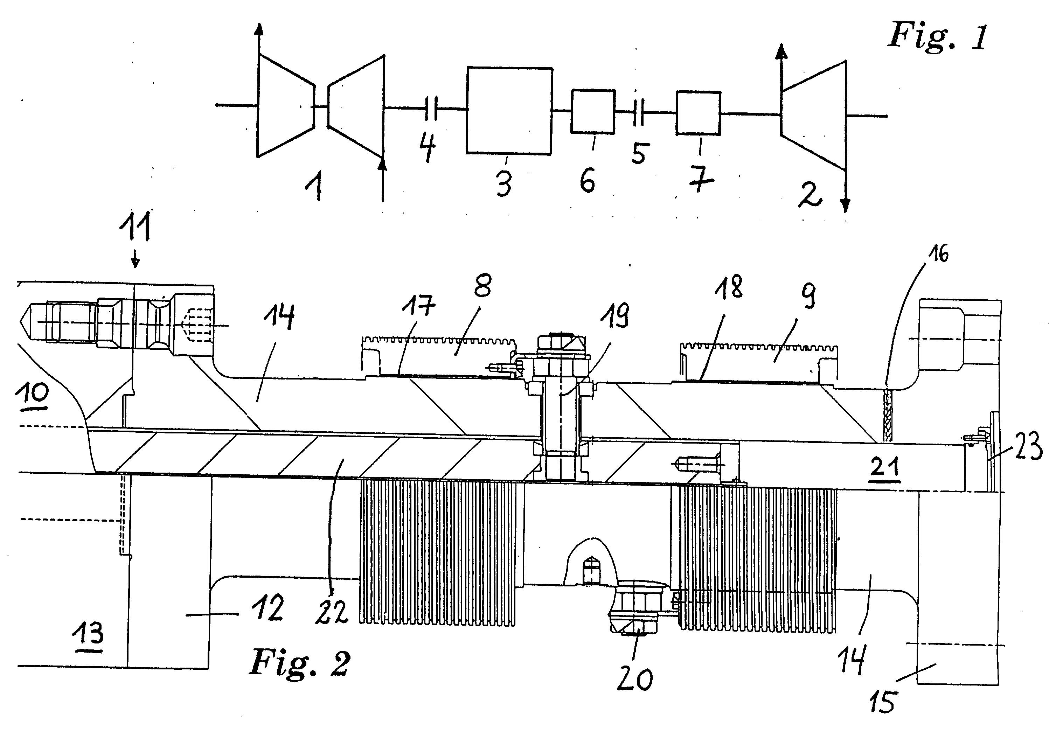

In Fig.1 ist eine Gasturbine 1 und eine Dampfturbine 2 mit den beiden Wellenenden eines Turbogenerators 3 über Kupplungen 4 und 5 verbunden. Mit der Bezugsziffer 6 ist die ausserhalb des Maschinengehäuses des Turbogenerators angeordnete Schleifringanordnung bezeichnet. Aus Gründen der Vollständigkeit ist auch die zwischen Dampfturbine 2 und dampfturbinenseitiger Kupplung 5 angeordnete Ueberholkupplung 7 eingezeichnet. Eine derartige Konfiguration wird mit Einwellenanlage bezeichnet.

Wie einleitend dargelegt wurde, besteht bei solchen Anlagen mit einem beidseitig angetriebenem Turbogenerator das Problem, die Schleifringe (der Schleifringanordnung 6) über den Kupplungsflansch stülpen zu können. Hier setzt nun die Erfindung ein. Erfindungsgemäss ist nun vorgesehen, die Schleifringanordnung 6 auf einer separaten Schleifringwelle anzuordnen.

Zu diesem Zweck sind - wie aus Fig.2 hervorgeht - die Schleifringe 8, 9 auf einer separaten, mit der eigentlichen Welle 10 der elektrischen Maschine mittels einer ersten lösbaren Kupplung 11 mit Kupplungsflanschen 12, 13 verbundenen hohlen Schleifringwelle 14 angeordnet. Diese Schleifringwelle 14 ist an ihrem der elektrischen Maschine abgewandten Ende mit einem weiteren Kupplungsflansch 15 versehen, der mit der Schleifringwelle durch Schweissen verbunden ist. Die Schweissstelle ist in Fig.2 mit der Bezugsziffer 16 bezeichnet. Ansonsten entspricht der Aufbau der Schleifringanordnung demjenigen einer konventionellen Maschine:

Die Schleifringe 8, 9 sind unter Zwischenschaltung einer Isoliermaterialschicht 17, 18 isoliert auf der Schleifringwelle 14 befestigt (aufgeschrumpft). Radiale Stromzuführungsbolzen 19, 20 führen von den Schleifringen 8 und 9 zu Stromschienen in der Wellenbohrung 21 der Schleifringwelle und von dort aus zur Erregerwicklung des Generators, von denen in Fig.2 nur die dem linken Schleifring 8 zugeordnete Stromschiene 22 sichtbar ist.

Bei der Herstellung der Schleifringanordnung wird von einer hohlen Welle ausgegangen, die an ihrem generatorseitigen Ende mit einem Kupplungsflansch 12 versehen ist und auch bereits alle Bohrungen zur Aufnahme der Stromzuführungsbolzen 19, 20 etc. enthält. Auf diese Welle werden nun die beiden Schleifringe 8, 9 aufgeschoben, ohne sie jedoch auf dieser Welle zu befestigen. Dann wird der dampfturbinenseitige Kupplungsflansch 15 an das dampfturbinenseitige Wellenende angeschweisst. Hierbei wird ein Kupplungsflansch mit Uebermass verwendet. Nach dem Spannungsfreiglühen zur Beseitigung der durch den Schweissprozess eingebrachten Spannungen wird der Kupplungsflansch 15 auf Sollmass überdreht, um einen guten Rundlauf zu gewährleisten. Danach werden die Schleifringe beiseite geschoben, und die Isolationsschichten 17 und 18, beispielsweise Polyimid-Folie mit entsprechender Dicke, auf die Welle aufgebracht, die Schleifringe 8, 9 induktiv erhitzt und auf den mit den Isolationsschichten versehenen Wellenabschnitt der Schleifringwelle 14 geschoben. Nach dem Abkühlen der Schleifringe 8, 9 sind diese auf der Welle betriebssicher befestigt. Im nächsten Schritt werden die Laufflächen der beiden Schleifringe 8, 9 überdreht, um optimalen Rundlauf zu erhalten. Abschliessend erfolgt der Stromanschluss der Schleifringe 8, 9 mittels der Stromzuführungsbolzen 19, 20 an die inzwischen in die Wellenbohrung 21 eingeschobenen und darin befestigten Stromschienen und das Verschliessen der Wellenbohrung 21 mit einem Deckel 23.

Eine wesentliche Voraussetzung für die Anwendung des beschriebenen Verfahren ist, dass auf der Schleifringwelle 14 in Axialrichtung genügend Raum vorhanden sein muss, um die beiden Schleifringe 8, 9 so weit beiseite schieben zu können, dass die Isolierschichten 17, 18 aufgbracht werden können. Aus der weitegehend masstäblichen Darstellung in Fig.2 ist zu erkennen, dass es ausreicht, wenn links zwischen dem späteren Sitz des linken Schleifrings 8 eine Distanz von etwa axialer Schleifringbreite und zwischen dem späteren Sitz der beiden Schleifringe eine ebensolche Distanz besteht. Die letztere Distanz ist ohnehin vorhanden, weil dort nach dem Aufschrumpfen der Schleifringe die Stromzuführungsbolzen 19, 20 zu liegen kommen. Auch die Distanz zwischen Kupplungsflansch 12 und linkem Schleifring ist gegeben, weil der den Schleifringen zugeordnete (nicht eingezeichnete) Bürstenapparat samt seinem Gehäuse ohnehin Platz in Axialrichtung beansprucht. Dies bedeutet letztlich, dass die gesamte axiale Baulänge der elektrischen Maschine durch die Erfindung nicht vergrössert wird.

### BEZEICHNUNGSLISTE

- 1: Gasturbine
- 2: Dampfturbine
- 3: Generator
- 4: gasturbinenseitige Kupplung
- 5: dampfturbinenseitige Kupplung
- 6: Schleifringanordnung
- 7: Ueberholkupplung
- 8,9: Schleifringe
- 10: Welle von 3
- 11: erste (generatorseitige) Kupplung
- 12,13: Kupplungsflansche von 11
- 14: hohle Schleifringwelle
- 15: schleifringseitiger Kupplungsflansch von 5
- 16: Schweissnaht
- 17,18: Isolierschichten
- 19,20: Stromzuführungsbolzen
- 21: Wellenbohrung in 14
- 22: Stromschiene
- 23: Deckel

## Patentansprüche

1. Elektrische Maschine mit einer ausserhalb des Maschinengehäuses angordneten Schleifringanordnung (6), mit Schleifringen (8,9), die isoliert auf einer Welle (14) befestigt sind, dadurch gekennzeichnet, dass die Schleifringe (8,9) auf einer separaten, mit der eigentlichen Welle (10) der elektrischen Maschine mittels einer ersten lösbaren Kupplung (11) verbundenen Schleifringwelle (14) angeordnet sind, welche Schleifringwelle an ihrem der elektrischen Maschine abgewandten Ende mit einem Kupplungsflansch (15), welcher die eine Hälfte einer zweiten Kupplung bildet, versehen ist, wobei dieser Kupplungsflansch (15) mit der Schleifringwelle (14) durch Schweissen verbunden ist.

2. Elektrische Maschine nach Anspruch 1, dadurch gekennzeichnet, dass zwischen dem schleifringseitigen Kupplungsflansch (12) der ersten Kupplung (11) und dem maschinenseitigen Schleifring (8) eine Distanz in der Grösse der axialen Breite dieses Schleifrings vorgesehen ist, und dass die axiale Distanz zwischen den beiden Schleifringen mindestens eine Länge in der Grösse des axialen Breite des anderen Schleifrings (9) beträgt.

3. Verfahren zur Herstellung einer Schleifringanordnung für die Maschine nach Anspruch 1, dadurch gekennzeichnet, dass auf eine einseitig mit einem ersten Kupplungsflansch (12) versehene Schleifringwelle (14) die beiden Schleifringe (8,9) aufgeschoben werden, dann an das freie Ende der Schleifringwelle (14) ein zweiter Kupplungsflansch (15) mit Uebermass angeschweisst wird, dieser danach durch thermische Behandlung spannungsfrei gemacht und auf Sollmass überdreht wird, anschliessend die beiden Schleifringe (8,9) isoliert auf der Schleifringwelle (14) befestigt und gleichfalls auf Sollmass überdreht werden.

## Claims

1. Electric machine having a slipring arrangement (6) which is arranged outside the machine housing and has sliprings (8, 9) which are mounted in an insulated fashion on a shaft (14), characterized in that the sliprings (8, 9) are arranged on a separate slipring shaft (14) which is connected to the actual shaft (10) of the electric machine by means of a first detachable coupling (11) and which is provided on its end averted from the electric machine with a coupling flange (15) which forms one half of a second coupling, this coupling flange (15) being connected to the slipring shaft (14) by welding.

2. Electric machine according to Claim 1, characterized in that there is provided between the coupling flange (12), on the slipring side, of the first coupling (11) and the slipring (8) on the machine side a distance of the order of magnitude of the axial width of this slipring, and in that the axial distance between the two sliprings is at least of a length of the order of magnitude of the axial width of the other slipring (9).

3. Method for producing a slipring arrangement for the machine according to Claim 1, characterized in that the two sliprings (8, 9) are pushed onto a slipring shaft (14) provided at one end with a first coupling flange (12), a second coupling flange (15) is then welded oversized onto the free end of the slipring shaft (14), said second coupling flange is thereafter rendered free of stress by heat treatment and skimmed to design size, and subsequently the two sliprings (8, 9) are mounted in an insulated fashion on the slipring shaft (14) and likewise skimmed to design size.

## Revendications

1. Machine électrique avec un arrangement de bagues collectrices (6) disposé à l'extérieur du bâti de la machine, avec des bagues collectrices (8, 9) qui sont fixées en étant isolées sur un arbre (14), caractérisée en ce que les bagues collectrices (8, 9) sont disposées sur un arbre séparé (14) pour les bagues collectrices, assemblé à l'arbre proprement dit (10) de la machine électrique au moyen d'un premier accouplement démontable (11), lequel arbre des bagues collectrices est pourvu, à son extrémité située à l'opposé de la machine électrique, d'un plateau d'accouplement (15) qui forme une première moitié d'un second accouplement, ce plateau d'accouplement (15) étant assemblé à l'arbre des bagues collectrices (14) par soudage.

2. Machine électrique suivant la revendication 1, caractérisée en ce qu'il est prévu entre le plateau d'accouplement (12) du premier accouplement (11) situé du côté des bagues collectrices et la bague collectrice (8) située du côté de la machine une distance de l'ordre de grandeur de la largeur axiale de cette bague collectrice, et en ce que la distance axiale entre les deux bagues collectrices a au moins une longueur de l'ordre de grandeur de la largeur axiale de l'autre bague collectrice (9).

3. Procédé pour la fabrication d'un arrangement de bagues collectrices pour la machine suivant la revendication 1, caractérisé en ce que les deux bagues collectrices (8, 9) sont glissées sur un arbre des bagues collectrices (14) pourvu sur un côté d'un premier plateau d'accouplement (12), un second plateau d'accouplement (15) surdimensionné est ensuite soudé à l'extrémité libre de l'arbre des bagues collectrices (14), celui-ci est ensuite soumis à un traitement thermique de relaxation des contraintes et tourné à la dimension nominale, puis les deux bagues collectrices (8, 9) sont fixées avec un isolement sur l'arbre des bagues collectrices (14) et également tournées à la dimension nominale.
